# EUROPEAN PATENT APPLICATION

(11) **EP 4 113 065 A1**
(43) Date of publication of application: **04.01.2023**
(21) Application number: 21305893.6
(22) Date of filing: 29.06.2021
(51) Int. Cl.: G01C 21/34, G01C 21/36, G08G 1/16, G05D 1/00, B60W 60/00

(54) **SYSTEMS AND METHODS FOR NAVIGATION OF AN AUTONOMOUS SYSTEM**

(71) Applicant: Université de Caen Normandie, 14032 Caen Cedex 5 (FR); Centre National de la Recherche Scientifique - CNRS, 75794 Paris Cedex 16 (FR); Ecole Nationale Supérieure d'Ingénieurs de Caen, 14050 Caen Cedex 4 (FR)
(72) Inventor: MOUADDIB, Abdel-Ilah, 14032 Caen (FR); JEANPIERRE, Laurent, 14610 Epron (FR)
(74) Representative: BCF Global

(57) **Abstract**

A system and a method for generating a navigation path for an autonomous system. The method comprises receiving data comprising characteristics of entities, the entities defining an environment in which the autonomous system is configured to operate; receiving first instructions causing the autonomous system to identify a destination in the environment; generating a navigation path comprising waypoints to be followed by the autonomous system to reach the destination, the waypoints being generated based on the characteristics of the entities and defining segmental paths; executing second instructions causing the autonomous system to navigate along the navigation path; and upon navigating from a first waypoint to a second waypoint: accessing updates of the characteristics of the entities located in a vicinity of a corresponding segmental path; generating a sub-path between the first waypoint and the second waypoint based on second information; and navigating along the sub-path to reach the second waypoint.

## Description

### FIELD OF TECHNOLOGY

The present technology relates to robotic vehicles and, specifically, to a method for generating a path for navigation of an autonomous system in populated environments by considering social and physical norms for social human interaction.

### BACKGROUND

Various techniques may be used for providing navigation paths for robotic vehicles. These systems may use Global Positioning System (GPS) or SLAM technologies or the like, computer vision algorithms, and/or artificial intelligence, among other technologies. The deployment of robotic vehicles as assistive systems in populated environments has recently gained more interest because of increased maturity and capabilities of those technologies. Guide robots in airports, server robots, cleaning robots, and assisting robots for the elderly or sick persons are only a few examples of assistive systems. However, such autonomous systems may need to respect social and physical norms by adapting their navigation paths within the environment in order to provide a harmonious coexistence with the people in its surroundings.

Even though the recent developments identified above may provide benefits, improvements are still desirable.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

### SUMMARY

Embodiments of the present technology have been developed based on developers' appreciation of shortcomings associated with the prior art.

In particular, such shortcomings may comprise (1) power-draining and time-consuming algorithms; (2) invariability of interaction with a person and a group of persons; and/or (3) definition of a destination depending whether the autonomous system has to interact with a person or not.

In a first broad aspect of the present technology, there is provided a method for generating a navigation path for an autonomous system, wherein the autonomous system comprises a processor. The method comprises receiving, by the processor, first data comprising characteristics of entities, the entities defining an environment in which the autonomous system is configured to operate, receiving, by the processor, first instructions causing the autonomous system to identify a destination in the environment, and generating a navigation path comprising waypoints to be followed by the autonomous system to reach the destination from a current position of the autonomous system. The waypoints are generated based on the characteristics of the entities and defining segmental paths. The method comprises executing, by the processor, second instructions causing the autonomous system to navigate along the navigation path. The method comprises upon navigation of the autonomous system from a first waypoint to a second waypoint, accessing second data comprising updates of the characteristics of the entities located in a vicinity of a corresponding segmental path. The method comprises generating, by the processor, a sub-path between the first waypoint and the second waypoint based on second data and executing, by the processor, third instructions causing the autonomous system to navigate along the sub-path to reach the second waypoint.

In some embodiments of the method, the first data and the second data are provided by two distinct sources of data.

In some embodiments of the method, entities are partitioned into human entities and non-human entities, characteristics of one of the human entities being selected in a group of characteristics comprising: a formation of the human entity, a number of persons comprised in the human entity, an orientation of the persons of the human entity, a location of the human entity, a level of business of the human entity, or a combination thereof.

In some embodiments of the method, upon receiving first instructions causing the autonomous system to identify a destination in the environment, the method further comprises determining whether the autonomous system has to interact with a human entity based on the first instructions. The method comprises, if determination is made based on the first instructions that the autonomous system has to interact with a human entity, accessing characteristics of the human entity and determining a destination in a vicinity of the human entity based on the characteristics of the human entity.

In some embodiments of the method, determining a destination in a vicinity of the human entity is further based on social and physical norms associated with the human entity.

In some embodiments of the method, locations of the waypoints are determined based on social and physical norms associated with the entities, the social and physical norms defining location costs, each location of one waypoint being associated with a location cost, each segmental path being associated with a location cost, and generating the navigation path comprises minimizing a global cost, the global cost comprising a combination of the location cost of each of the waypoints and each segmental path.

In some embodiments of the method, generating a sub-path between the first waypoint and the second waypoint comprises generating one or more sub-waypoints to be followed by the autonomous system to reach the consecutive waypoint, the sub-waypoints being generated based on social and physical norms associated with the entities, the social and physical norms defining location costs, each location of one sub-waypoint being associated with a location cost, and generating the sub-path comprises minimizing a sub-cost, the sub-cost comprising a combination of the location cost of each of the one or more sub-waypoints.

In some embodiments of the method, a first set of social and physical norms are associated with human entities and a second set of social and physical norms are associated with non-human entities.

In some embodiments of the method, the method comprises, concurrently to executing, by the processor, second instructions causing the autonomous system to navigate along the navigation path, updating the characteristics of entities in the environment is received by the processor and adjusting the locations of the waypoints based on the update of the characteristics of entities.

In some embodiments of the method, the autonomous system comprises a perception unit configured to provide the characteristics of entities in the vicinity of the autonomous system to the processor and the second data is provided by the perception unit.

In a second broad aspect of the present technology, there is provided an autonomous system configured for navigating in an environment. The autonomous system comprises a processor comprising at least one processor and a memory storing a plurality of executable instructions which, when executed by the at least one processor, cause the processor to receive first data comprising characteristics of entities in the environment, the entities defining an environment in which the autonomous system is configured to operate. The system is configured to receive first instructions causing the autonomous system to identify a destination in the environment and generate a navigation path comprising waypoints to be followed by the autonomous system to reach the destination from a current position of the autonomous system. The waypoints are generating based one the characteristics of the entities and defining segmental paths between two consecutive waypoints. The processor is configured to cause the autonomous system to navigate along the navigation path. The processor is configured to, upon navigation of the autonomous system from a first waypoint to a second waypoint, access second data comprising updates of the characteristics of the entities located in a vicinity of a corresponding segmental path, generate a sub-path between the first waypoint and the second waypoint based on second data and follow the sub-path to reach the second waypoint.

In some embodiments of the system, the system comprises a network device communicably connected to a network and configured for receiving the characteristics of the entities and the updates of the characteristics of the entities and a perception unit configured to provide the characteristics and the updates of the characteristics of the entities in the vicinity of the autonomous system.

In some embodiments of the system, locations of the waypoints are determined based on social and physical norms associated with the entities, the social and physical norms defining location costs, each location of one waypoint being associated with a location cost, each segmental path being associated with a location cost, and generating the navigation path comprises minimizing a global cost, the global cost comprising a combination of the location cost of each of the waypoints and each segmental path.

In some embodiments of the system, upon generating a sub-path between the first waypoint and the consecutive waypoint, the processor is further configured to generate one or more sub-waypoints to be followed by the autonomous system to reach the consecutive waypoint, the sub-waypoints being generated based on social and physical norms associated with the entities, the social and physical norms defining location costs, each location of one sub-waypoint being associated with a location cost, and generating the sub-path comprises minimizing a sub-cost, the sub-cost comprising a combination of the location cost of each of the one or more sub-waypoints.

In some embodiments of the system, entities are partitioned into human entities and non-human entities, characteristics of one of the human entities being selected in a group of characteristics comprising: a formation of the human entity, a number of persons comprised in the human entity, an orientation of the persons of the human entity, a location of the human entity, a level of business of the human entity, or a combination thereof.

In some embodiments of the system, upon receiving first instructions causing the autonomous system to identify a destination in the environment, the processor is further configured to, if determination is made based on the first instructions that the autonomous system has to interact with a human entity, access characteristics of the human entity and determine a destination in a vicinity of the person based on the characteristics of the human entity and the social and physical norms.

In some embodiments of the system, entities are partitioned into human entities and non-human entities, and a first set of social and physical norms are associated with human entities and a second set of social and physical norms are associated with non-human entities.

In the context of the present specification, unless expressly provided otherwise, a computer system may refer, but is not limited to, an "electronic device", an "operation system", a "system", a "computer-based system", a "controller unit", a "monitoring device", a "control device" and/or any combination thereof appropriate to the relevant task at hand.

In the context of the present specification, unless expressly provided otherwise, the expression "computer-readable medium" and "memory" are intended to include media of any nature and kind whatsoever, non-limiting examples of which include RAM, ROM, disks (CD-ROMs, DVDs, floppy disks, hard disk drives, etc.), USB keys, flash memory cards, solid state-drives, and tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

In the context of the present specification, the expression "information" includes information of any nature or kind whatsoever capable of being stored in a database. Thus, information includes, but is not limited to audio-visual works (images, movies, sound records, presentations etc.), data (location data, numerical data, etc.), text (opinions, comments, questions, messages, etc.), documents, spreadsheets, etc.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a representation of a computer system suitable for use according to some embodiments of the present technology;
Figure 2 is a diagram of an autonomous system according to some embodiments of the present technology;
Figure 3 illustrates the autonomous system navigating in a populated environment according to some embodiments of the present technology;
Figure 4 illustrates a navigation path of the autonomous system according to some embodiments of the present technology;
Figure 5 illustrates the autonomous system navigating from a first waypoint to a second waypoint along a sub-path according to some embodiments of the present technology;
Figure 6 illustrates the autonomous system navigating from a first waypoint to a second waypoint 520 along another sub-path according to some embodiments of the present technology;
Figures 7a, 7b, 7c and 7d illustrate private areas of different human entities according to some embodiments of the present technology; and
Figure 8 is a flow diagram showing operations of a method for generating a navigation path for an autonomous system according to some embodiments of the present technology.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology.

Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labelled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

With these fundamentals in place, we will now consider some non-limiting examples to illustrate various implementations of aspects of the present technology.

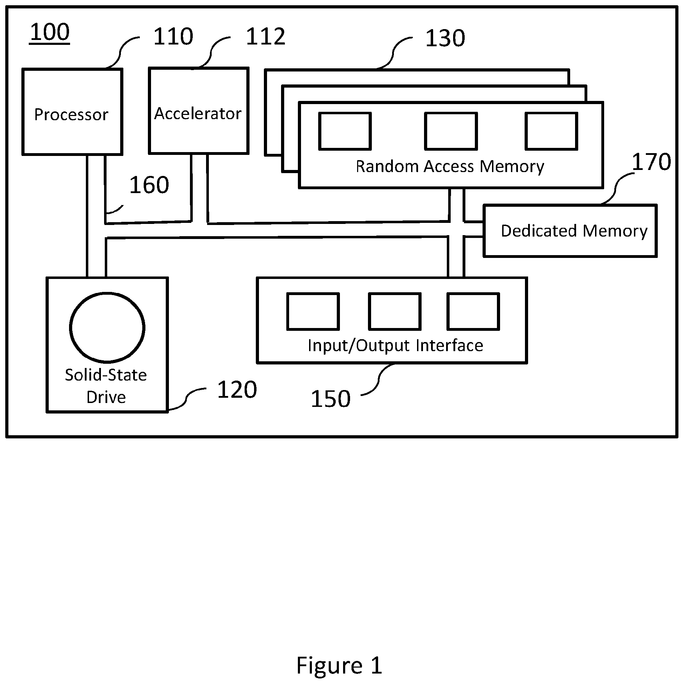

With reference to Figure 1, there is shown a computer system 100 suitable for use in accordance with at least some embodiments of the present technology. The computer system 100 may be implemented by any of a conventional personal computer, a network device and/or an electronic device (such as, but not limited to, a mobile device, a tablet device, a server, a controller unit, a control device, etc.), and/or any combination thereof appropriate to the relevant task at hand. In some embodiments, the computer system 100 comprises various hardware components including one or more single or multi-core processors collectively represented by processor 110, a solid-state drive 120, a random-access memory 130, and an input/output interface 150. The computer system 100 may be a computer specifically designed to operate a machine learning algorithm (MLA). The computer system 100 may be a generic computer system. The computer system 100 may be integrated in a robotic vehicle and/or may be configured to control a robotic vehicle.

In some embodiments, the computer system 100 may also be a subsystem of one of the above-listed systems. In some other embodiments, the computer system 100 may be an "off-the-shelf' generic computer system. In some embodiments, the computer system 100 may also be distributed amongst multiple systems. The computer system 100 may also be specifically dedicated to the implementation of the present technology. As a person in the art of the present technology may appreciate, multiple variations as to how the computer system 100 is implemented may be envisioned without departing from the scope of the present technology.

Those skilled in the art will appreciate that processor 110 is generally representative of a processing capability. In some embodiments, in place of or in addition to one or more conventional Central Processing Units (CPUs), one or more specialized processing cores may be provided. For example, one or more Graphic Processing Units 111 (GPUs), Tensor Processing Units (TPUs), and/or other so-called accelerated processors (or processing accelerators) may be provided in addition to or in place of one or more CPUs.

System memory will typically include random access memory 130, but is more generally intended to encompass any type of non-transitory system memory such as static random access memory (SRAM), dynamic random access memory (DRAM), synchronous DRAM (SDRAM), read-only memory (ROM), or a combination thereof. Solid-state drive 120 is shown as an example of a mass storage device, but more generally such mass storage may comprise any type of non-transitory storage device configured to store data, programs, and other information, and to make the data, programs, and other information accessible via a system bus 160. For example, mass storage may comprise one or more of a solid-state drive, hard disk drive, a magnetic disk drive, and/or an optical disk drive.

Communication between the various components of the computer system 100 may be enabled by a system bus 160 comprising one or more internal and/or external buses (e.g., a PCI bus, universal serial bus, IEEE 1394 "Firewire" bus, SCSIbus, Serial-ATA bus, ARINC bus, etc.), to which the various hardware components are electronically coupled.

The input/output interface 150 may provide networking capabilities such as wired or wireless access. As an example, the input/output interface 150 may comprise a networking interface such as, but not limited to, a network port, a network socket, a network interface controller and the like. Multiple examples of how the networking interface may be implemented will become apparent to the person skilled in the art of the present technology. For example, the networking interface may implement specific physical layer and data link layer standards such as Ethernet, Fibre Channel, Wi-Fi or any other radio data link protocol, Token Ring or Serial communication protocols. The specific physical layer and the data link layer may provide a base for a full network protocol stack, allowing communication among small groups of computers on the same local area network (LAN) and large-scale network communications through routable protocols, such as Internet Protocol (IP).

The input/output interface 150 may be coupled to a touchscreen 190 and/or to the one or more internal and/or external buses 160. The touchscreen 190 may be part of the display. In some embodiments, the touchscreen 190 is the display. The touchscreen 190 may equally be referred to as a screen 190. In the embodiments illustrated in Figure 1, the touchscreen 190 comprises touch hardware 194 (e.g., pressure-sensitive cells embedded in a layer of a display allowing detection of a physical interaction between a user and the display) and a touch input/output controller 192 allowing communication with the display interface 140 and/or the one or more internal and/or external buses 160. In some embodiments, the input/output interface 150 may be connected to a keyboard (not shown), a mouse (not shown), a trackpad (not shown), a vocal Human-Machine Interface (HMI) (not shown) and/or any other device suitable for allowing the user to interact with the computer system 100 in addition to or instead of the touchscreen 190.

According to some implementations of the present technology, the solid-state drive 120 stores program instructions suitable for being loaded into the random-access memory 130 and executed by the processor 110 for executing acts of one or more methods described herein. For example, at least some of the program instructions may be part of a library or an application.

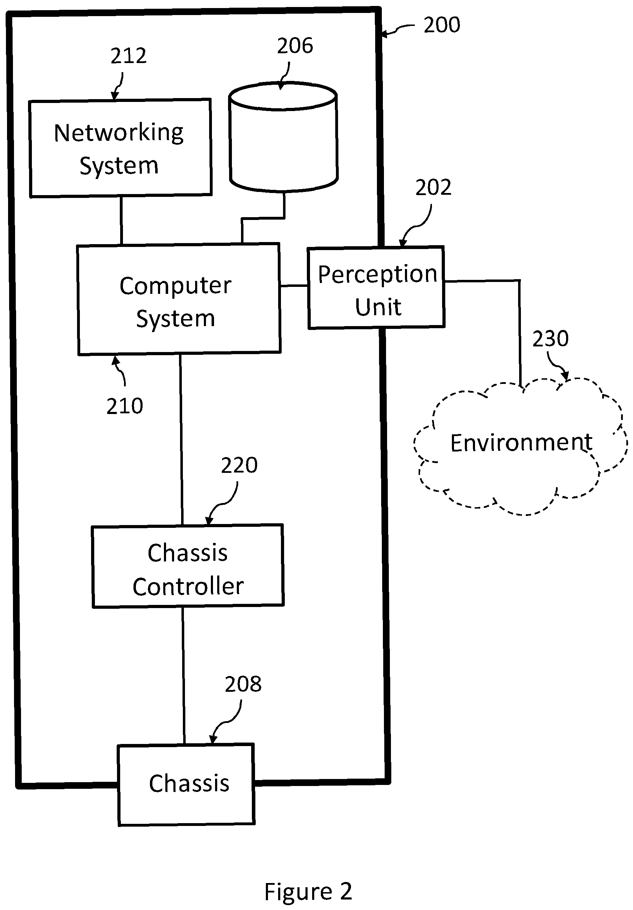

Figure 2 illustrates a diagram of an autonomous system 200 in accordance with at least some embodiments of the present technology. The autonomous system 200 may be a vehicle configured to navigate within an environment 230 for various assistive purposes such as finding and/or guiding a person or a group of persons, interacting with a person or a group of persons, delivering goods, etc. The autonomous system 200 may be a self-driving vehicle and/or may be controlled, remotely or locally, by a human operator. The autonomous system 200 may be a land vehicle comprising a chassis and wheels, an air vehicle such as a drone, and/or a vehicle for traveling across water, snow, sand, and/or any other surface (or combination of surfaces).

The autonomous system 200 may comprise a computer system 210. The computer system 210 may be the computer system 100 and/or may include some or all of the components of the computer system 100. The computer system 210 comprises a processor that may control various aspects of the autonomous system 200, such as by determining a navigation path, or simply "path", for the autonomous system 200 and causing the autonomous system 200 to travel along the navigation path. The computer system 210 may store the navigation path and/or any other information in a memory 206. The memory 206 may be any type of storage medium, such as an SSD or flash memory. The computer system 210 may control any aspect of the autonomous system 200, such as lights on the autonomous system 200, speakers of the autonomous system 200, a speed of the autonomous system 200, etc.

The environment 230 may include entities such as walls, doors, shops, offices, desks, tables, plants, persons, groups of persons, etc. Therefore, the entities may be partitioned into "human entities" and "non-human entities". A human entity may be a person or a group of persons.

The autonomous system 200 may comprise a chassis 208, which may include and/or be connected to any number of wheels. The chassis 208 may comprise six 3-axis wheels or any other suitable mechanism for causing the autonomous system 200 to travel, such as continuous tracks, skis, a mechanism for traveling on rails, and/or any other suitable mechanism for navigating within the environment 230.

The autonomous system 200 may comprise a perception unit 202. The perception unit 202 may include image sensors, charge-coupled device (CCD) sensors, complementary metal oxide semiconductor (CMOS) sensors, digital cameras, light detection and ranging (LiDAR) sensors, radar sensors, time of flight (TOF) 3D cameras, stereo vision sensors comprising two or more cameras, 3D sonar, such as 3D ultrasound sensors, structured-light 3D cameras and/or scanners, and/or any other type of sensors. The perception unit 202 may be communicably connected with the computer system 210 and may be configured to gather data regarding the environment 230. The perception unit 202 may be, for instance and without limitation, mounted in a dedicated enclosure mounted on the top of the autonomous system 200.

The perception unit 202 may include one or more cameras configured to capture images and/or video of the environment 230. The cameras may be configured to capture a portion of the environment 230 surrounding the autonomous system 200, such as a 90-degree view or a 180-degree view of the environment 230 in the direction of travel of the autonomous system 200. The perception unit 202 may comprise one or more light detection and ranging (LiDAR) sensors and/or one or more radio detection and ranging (radar) sensors. The radar sensors may comprise long-range, medium-range, and/or short-range radar sensors. The perception unit 202 may be used for adaptive cruise control, automatic emergency braking, and forward collision warning, park assist, cross-traffic alert, junction assist, blind side detection, and/or other functions of the robotic vehicle 200. The perception unit 202 may comprise CCD/CMOS sensors and/or other sensors.

The perception unit 202 may comprises ultrasonic SONAR sensors, odometry sensors including accelerometers and gyroscopes, mechanical tilt sensors, and/or a magnetic compass.

The chassis controller 220 may be communicably connected to the computer system 210. The chassis controller 220 may receive a navigation path and/or other instructions from the computer system 210. The chassis controller 220 may control the chassis 208 based on the instructions from the computer system 210. For example, the chassis controller 220 may receive a navigation path from the computer system 210 and control the chassis 208 to cause the autonomous system 200 to navigate within the environment 230 according to the navigation path.

A map of the environment 230 may be stored in the memory 206 and/or accessed by the computer system 210. The map may be used by the computer system 210 to determine a current location of the autonomous system 200 in the environment 230. The autonomous system 200 may include a global positioning system (GPS) sensor (not depicted), SLAM algorithms and/or other positioning technologies for determining a location of the autonomous system 200 in the environment 230 using the map.

The autonomous system 200 may comprise a networking system 212. The networking system 212 may be used by the computer system 210 to communicate with one or more remote servers and/or other devices. The networking system 212 may communicate a Local Area Network (LAN), a wireless connection such as a Wireless Local Area Network (WLAN), a non-local network (WAN) and/or any other type of network. The networking system 212 may communicate via Wi-Fi, cellular network, and/or any other type of network. The computer system 210 may download update of the map of the environment 230, instructions, indication of a destination, and/or any other information using the networking system 212. The networking system 212 may be used to upload a current position of the robotic vehicle 200, speed of the robotic vehicle 200, generated navigation path of the robotic vehicle, data measured by the perception unit 202, and/or any other information regarding the autonomous system 200. The computer system 210 may be configured to upload information to a server managing the autonomous system 200 using the networking system 212.

The map of the environment 230 may comprise a representation of the environment 230 and/or indication of entities of the environment 230. The map may include multiple layers, where each layer provides a different type of information. For example, a first layer of the map may include structures of the environment 230, such as corridors, stairs, doors, etc; a second layer may comprise characteristics of obstacles, such as benches, plants, tables, etc; and a third layer may comprise characteristics of human entities in the environment 230. The different layers of the map may provide a different resolution and/or level of detail. The computer system 210 may update one or more layer of the map using the perception unit 202. For instance, the computer unit may determine characteristics of non-human entities and/or human entities located in a vicinity of the autonomous system 200 based on the perception unit 202 and further update the map of the environment 230. The characteristics of a non-human entity may comprise a location or any other information of said non-human entity. The characteristics of a human entity may comprise a location, an orientation, a level of business or any other information of said non-human entity. The computer system 210 may receive information from the networking system 212 to update characteristics of non-human entities and/or characteristics of human entities of the environment 230 and that may possibly be out of detection reach of the perception unit 202.

The computer system 210 may generate a navigation path. The navigation path may be determined based on the map of the environment 230 and on social and physical norms that may be stored in the memory 206. The social and physical norms may be populated in the memory 206 by an operator of the autonomous system 200 prior or during operation of the autonomous system 200. The social and physical norms may comprise one or more sets of computer-readable rules and/instructions causing the autonomous system 200 to navigate in accordance with social rules that may be associated with the environment 230. The social and physical norms may be populated and/or updated by the computer system 210 based on instructions send by the operator and received by the networking device 212. Therefore, the social and physical norms may be adjusted to the environment 230. Adjusting the social and physical norms may enable the autonomous system 200 to navigate seamlessly with navigation standards of the environment 230. Notably, adjusting the social and physical norms may cause the autonomous system to navigate in the environment 230 without inconveniencing, offending or disturbing human entities of the environment 230. For instance, the social and physical norms may include instructions causing the autonomous system not to navigate too close to a human entity's back, or in a middle of a group of persons. Therefore, it can be said that the navigation path is a "social navigation path" as it takes into consideration social and physical norms to provide the autonomous system with a path in populated environments. Therefore, the social and physical norms comprise rules for social human interaction and avoidance. The social and physical norms may also ensure the safety if the autonomous system 200, causing, for instance, the autonomous system 200 to navigate at a reasonable distance from the walls, doors, angles, obstacles, etc. Social and physical norms may be associated with entities of the environment 230. For instance, a first set of social and physical norms may be associated with the human entities and a second set of social and physical norms may be associated with the non-human entities.

The navigation path may define a path to be travelled by the autonomous system 200 to reach a destination. The navigation path may comprise one or more waypoints in the format of a series of coordinates, a series of instructions, and/or any other suitable format. Determining location of the one or more waypoints is described in greater details hereinafter.

The computer system 210 may receive instructions to interact with a human entity associated with a location. In this situation, the computer system 210 may determine a destination in a vicinity of the human entity based on the map of environment 230 and the social and physical norms.

The navigation path may be stored in the memory 206 and/or transmitted to the chassis controller 220. The computer system 210 may generate instructions for the chassis controller 220 based on the navigation path.

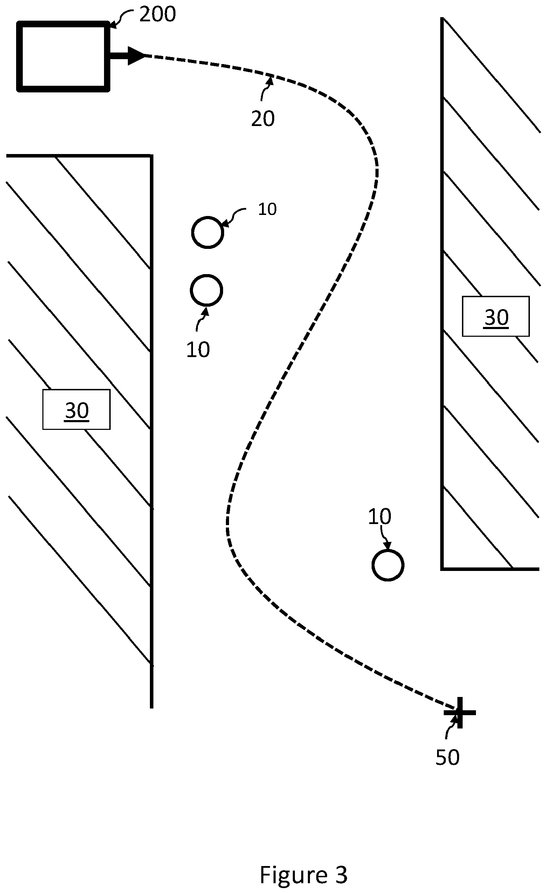

Figure 3 illustrates the autonomous system 200 navigating in a populated environment 230, for instance a mall, to reach a destination 50 in accordance with at least some embodiments of the present technology. An arrow illustrated on the autonomous system 200 indicates a current direction of travel of the autonomous system 200. The environment 230 may comprise one or more persons 10, thereby defining one or more human entities. The environment 230 may comprise inaccessible areas 30 where the autonomous system 200 might not be able to navigate (for examples closed shops of the mall). A navigation path 20 may be generated by the computer system 210 to cause the autonomous system 200 to reach the destination 50 and to avoid navigating within a first range of the persons 10.

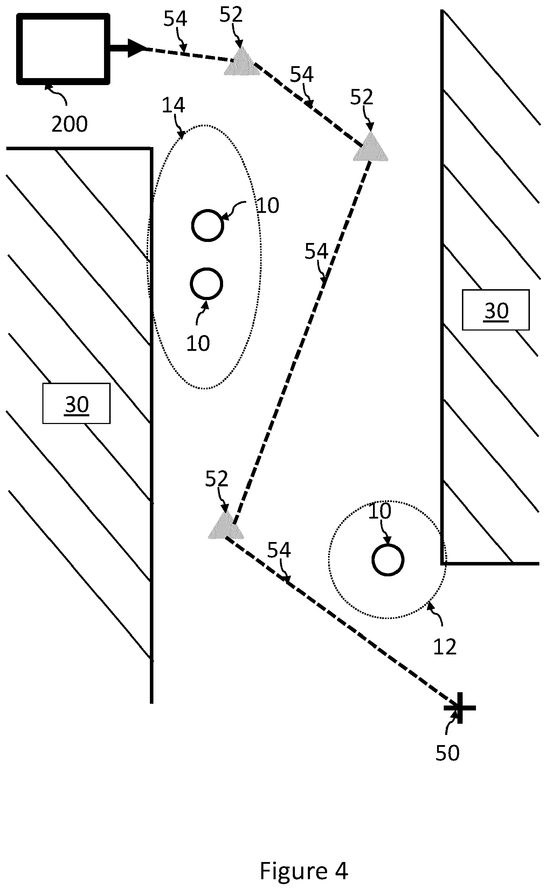

Figure 4 illustrates a navigation path of the autonomous system 200 in accordance with at least some embodiments of the present technology. Based on the map of the environment 230, the computer system 210 may access location of persons 10 within the environment 230. The social and physical norms may cause the computer system 210 to determine private areas 12 and 14 associated with the persons 10. The private areas 12 and 14 may define areas of the environment 230 where the autonomous system 200 may not navigate in order not to disturb the persons 10. The private areas may be determined based on characteristics of the person 10. For instance, in the illustrative embodiment of Figure 3, the environment 230 comprises three persons 10. The one person located in the private area 12 is associated with a circular private area 12. A radius of the private area 12 may be determined based on the social and physical norms. Moreover, as it will be described in greater details hereinafter, the private area 12 may have a different shape based on characteristics of the associated person 10. The two persons 10 located in the private area 14 are close to each other, or, in other word, a distance between their corresponding locations is below a first threshold. Thereby, the computer system 210 may determine that the two persons 10 located in the private area 12 are interacting one with another. Therefore, the private area 14 may have an ellipsoidal shape and may surround the human entity comprising the two persons 10.

In this illustrative embodiment, the navigation path comprises one or more waypoints 52, the one or more waypoints 52 being determined by the computer system 210 based on the map and the social and physical norms. The one or more of waypoints 52 define one or more segmental paths 54, each segmental path being defined between two consecutive waypoints 52. The autonomous system 200 may be configured to navigate on the one or more segmental paths 54 to reach the destination 50. Besides, the computer system 210 may determine the location of the one or more waypoints 52 so that the segmental paths 54 do not intersect the private areas 12 and 14.

Location of waypoints may be updated and/or adjusted by the computer system 210 based on information provided by the networking system 212 and/or the perception unit 202. For instance, if determination is made that a waypoint 52 and/or the destination 50 is located within a private area such as private areas 12 and 14, the computer system may update a location of said waypoints 53 and or destination 50. The navigation path may be stored in the memory 206 by the computer system 206.

In the same or another embodiment, each waypoint 54 is associated with a location cost, the location cost of a waypoint being an indication of a safeness of the autonomous system 200 and entities in its surroundings when the autonomous system is located at said waypoint. Therefore, the location cost may depend on characteristics of the entities when the location of the waypoint is determined. For instance, a location cost of a waypoint located in a middle of a corridor may be higher than a location cost of a waypoint located near a wall of the corridor, as it may be riskier for the autonomous system 200 to navigate in the middle of the corridor due to higher chance of encountering and interfering with a person. Similarly, a location cost of a waypoint located near a human entity may be higher than a location cost of a waypoint located further from said human entity, as it may be riskier for the autonomous system 200 to navigate in the middle of the corridor due to higher chance of encountering and interfering with a person.

The location costs may be determined by the computer system 210 based on the map of the environment 230. Alternatively or additionally, a location of the segmental paths between the waypoints may be associated with location costs based on social and physical norms combined with the map of the environment 230 comprising the entities. For instance, a segmental path intersecting a private area may have a higher location cost than a segmental path that does not intersect said private area. Determining the navigation path may comprise determining locations of the waypoints that minimize a global cost, the global cost comprising a combination of the location cost of each waypoint and each segmental path. The location cost of the waypoints may be determined based on location of the waypoints and/or location of the segmental paths between the waypoints. For instance, two consecutive waypoints having a corresponding segmental path intersecting a private area such as private areas 12 and 14 may be associated with a high location cost. The global cost of a navigation path may also comprise a length cost, based on a total length of the navigation path.

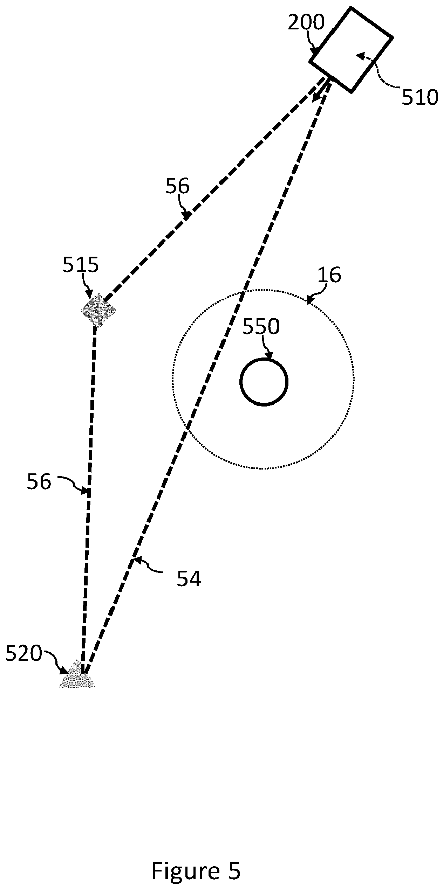

Figure 5 illustrates the autonomous system 200 navigating from a first waypoint 510 to a second waypoint 520 in accordance with at least some embodiments of the present technology. In the illustrative embodiment of Figure 5, the autonomous system is located at the first waypoint 510, the second waypoint 520 being the waypoint consecutive to the first waypoint 510 according to the navigation path 20. As the entities within the environment 230 may move, it may happen that, subsequent to the aforementioned determination of the one or more waypoints, a segmental path 54 intersects a private area 16 of an entity 550 as depicted on Figure 5. More precisely, the entity 550 has moved between a time the determination of the waypoints 510 and 520 on the map and a time of the actual navigation of the autonomous system 200 between said two waypoints. This may cause the segmental path between said waypoints to eventually intersect with the private area 16. Such intersection may be determined by the computer system based on the perception unit 202. The perception unit 202 may provide update of the characteristics of the entities located in a vicinity of the autonomous system 200, thereby causing an update of the map of the environment 230. Using the updated characteristics of the entity 550, more precisely an updated position of the entity 550 in this illustrative example, the computer system 210 may determine that the segmental path 54 intersects the private area 16.

Upon navigating between the two consecutive waypoints 510 and 520, the computer system 210 may generate a sub-path between the two consecutive waypoints 510 and 520 so that the autonomous system navigates in accordance with the social and physical norms associated with the entities located in a vicinity of the segmental path 54. The sub-path may comprise one or more sub-waypoints 515 in the format of a series of coordinates, a series of instructions, and/or any other suitable format, the computer system 210 causing the autonomous system to follow the one or more sub-waypoints 515 to reach the second waypoint 520. A location of the second waypoint 520 may be adjusted in a similar manner if determination is made by the computer system 210 that it is located within a private area such as private area 16. The sub-waypoints 515 may define segmental paths 56 between two consecutive sub-waypoints 515.

In the same or another embodiment, each sub-waypoint 515 is associated with a location cost using the same approach as the waypoints 54. The location costs of sub-waypoints 515 may be determined by the computer system 210 based on the map of the environment 230 upon navigating from the first waypoint 510 to the second waypoint 520. Generating the sub-path may comprise determining locations of the sub-waypoints 515 that minimize a sub-cost, the sub-cost comprising a combination of the location cost of each sub-waypoints 515 determined between the first waypoint 510 and the second waypoint 520. The sub-cost of a sub-path may also comprise a length cost, based on a total length of the sub-path.

Alternatively or additionally, a location of the segmental paths between the sub-waypoints may be associated with location costs based on social and physical norms combined with the map of the environment 230 comprising the entities. For instance, two consecutive sub-waypoints having a corresponding segmental path intersecting a private area such as private area 16 may be associated with a high location cost. In the illustrative example of Figure 5, the sub-path 54 may have a higher sub-cost than the sub-path comprising the sub-waypoint 515 and two segmental paths 56.

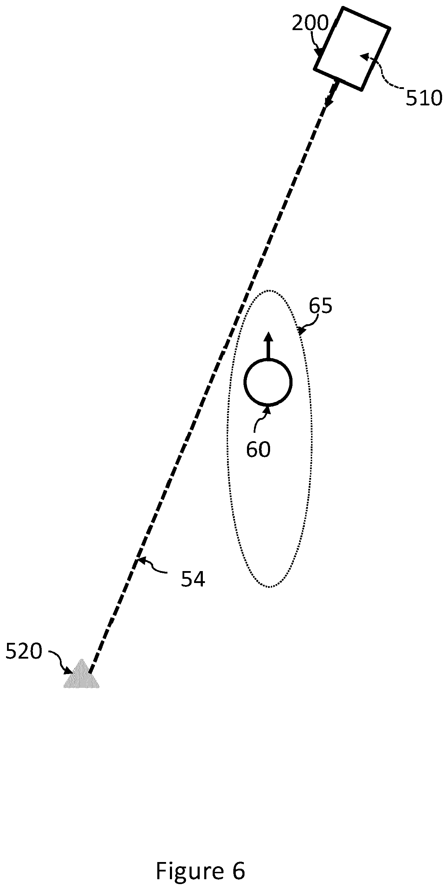

Figure 6 illustrates the autonomous system 200 navigating from a first waypoint 510 to a second waypoint 520 in accordance with at least some embodiments of the present technology. As described hereinbefore, the map of the environment 230 may comprise characteristics of entities. Notably, the map may comprise an orientation of the human entities. Figure 6 illustrates a human entity 60 associated with a private area 65. An arrow illustrated on the human entity 60 indicates a current orientation of the human entity 60. Based on the orientation of the human entity 60, the computer system 210 may determine a shape of the private area 65. In this illustrative embodiment, the private area 65 is ellipsoidal but this aspect is not limitative as other shapes of the private area 65 may be considered. A larger portion of the private area 65 may be located in the back of the human entity 60 as it may be disturbing and/or inconveniencing for the human entity 60 to have the autonomous system navigating in its back. Again, this aspect is not limitative and is merely an example of a possible shape of the private area based on the orientation of the human entity 60.

In this illustrative situation, the segmental path 54 does not intersect with the private area 65. Therefore, a sub-path between the first waypoint 510 and the second waypoint 520 may be defined by the segmental path 54.

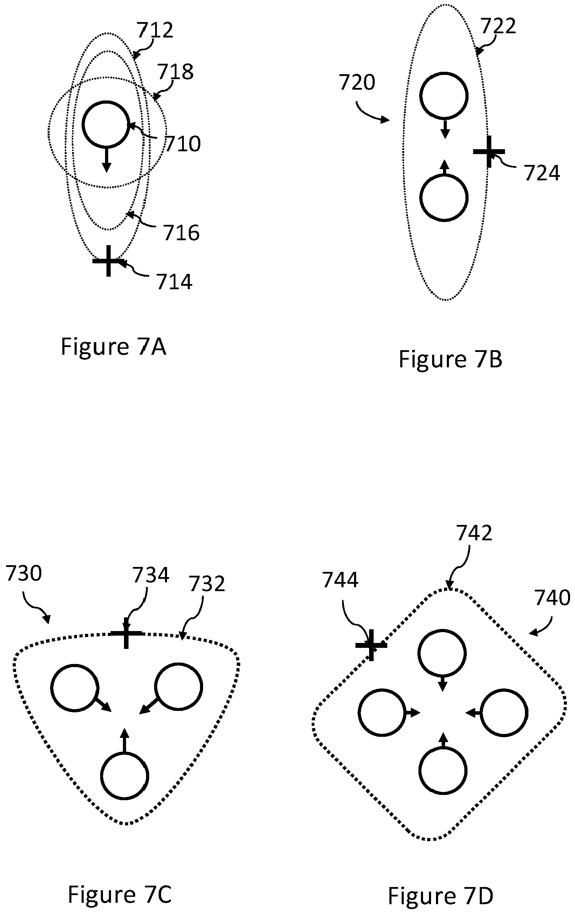

Figures 7a, 7b, 7c and 7d illustrate private areas of different human entities in accordance with at least some embodiments of the present technology. Figure 7a illustrates a private area 712 of a human entity 710 comprising one person. The private area 712 is ellipsoidal but this aspect is not limitative. A shape and an orientation of the private area 712 may depend on an orientation of the human entity 710. An ideal interaction destination 714 may be associated with the private area 712. Therefore, a position of the ideal interaction destination 714 may move according to the location of the human entity 710 in the map of the environment. Based on the orientation of the human entity 710, the computer system 210 may determine the shape of the private area 712 and the location of the ideal interaction destination 714. If the computer system 210 receives instructions to interact with the human entity 710, the computer system 210 may identify the ideal interaction destination 714 as the destination of the navigation path. Additionally, the computer system 210 may update a position of the destination of determination is made that the ideal interaction destination 714 has moved. The ideal interaction destination may be an area in the map of the environment 230, thereby defining an interaction space.

Figure 7b illustrates a private area 722 of a human entity 720 comprising two persons. A formation, also known as "F-formation", may be identified as a characteristic of human entities that comprise two or more persons, a formation of a group comprising a description of a spatial organisation of the group. For instance, the formation of a group may describe whether the group is forming a "L" shape, a "U" shape, etc. Based on locations and orientations of the persons comprised in the human entity 720, a formation of the human entity 720 may be determined by the computer system 210. The private area 722 and an ideal interaction destination 724 may also be defined based on characteristics of the human entity 720.

Figures 7c and 7d illustrate private areas 732 and 742 of human entities 730 and 740 comprising three persons and four persons respectively. The private areas 732 and 742 and ideal interaction destinations 734 and 744 of the human entities 730 and 740 may be defined based on characteristics of the human entities 730 and 740 respectively. Formations of the human entities 730 and 740 are illustrative formation. Other formations, such as "L" shape formation and "U" shape formation may also be contemplated.

Human entities comprising a higher number of persons are also contemplated. The computer system 210 may be configured to identify characteristics of the human entities, notably a number of persons comprised in the human entities and a formation of the human entities and determined the private areas and the ideal interaction destination associated thereto.

The private area associated with a human entity may comprise a plurality of subareas populated in the map of the environment 230. Each subarea may be associated with one or more corresponding social and physical norms. Therefore, segmental paths intersecting the subareas may be associated with a distinct location cost depending on the subareas they are intersecting. A subarea may have a different shape than its corresponding private area and/or than other subareas of its corresponding private area. A subarea may extend outside its corresponding private area. As an example, Figure 7a illustrates two subareas 716 and 718 that may be associated with distinct social and physical norms. Said social and physical norms may for instance be set so that segmental paths intersecting the subarea 718 may be associated with a location cost higher than a location cost of segmental paths intersecting the subarea 716. Indeed, it may be riskier for the autonomous system 200 and/or the human entity 710 to have the autonomous system 200 navigating through the subarea 718 than though the subarea 716.

Definition of the private areas and the ideal interaction destinations based on characteristics of the human entities may be stored as instructions and/or functions as disclosed in Dynamic proxemia modeling formal framework of social navigation and interaction (Abir Bellarbi, Abdel-illah Mouaddib, Noureddine Ouadah and Nouara Achour), published in 25 August 2020, the content of which being hereby incorporated by reference. Said instructions and/or functions may be stored in the memory 206.

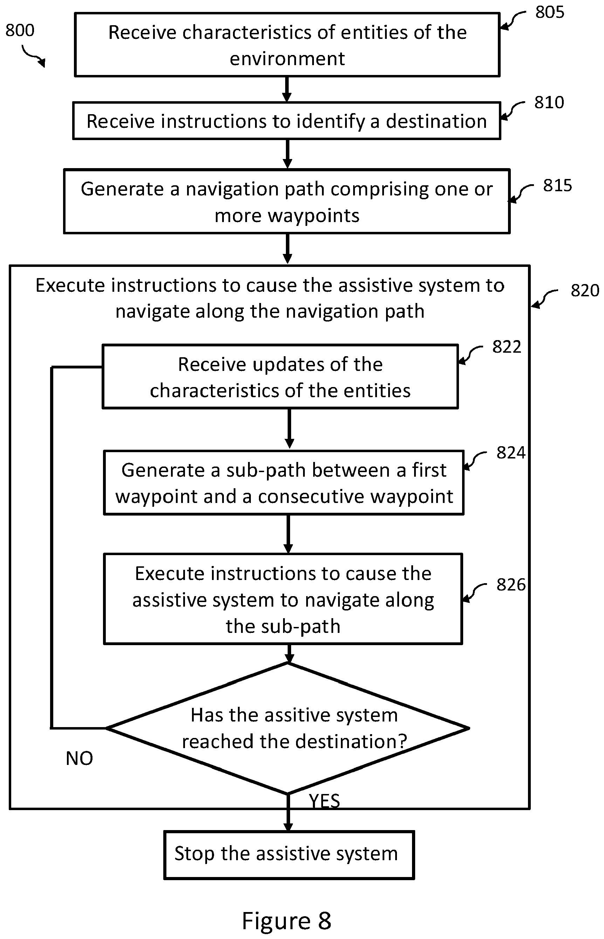

Figure 8 is a flow diagram of a method 800 for generating a navigation path for an autonomous system, such as the autonomous system 200, according to some embodiments of the present technology. In one or more aspects, the method 800 or one or more steps thereof may be performed by a computer system, such as the computer system 210. The method 800 or one or more steps thereof may be embodied in computer-executable instructions that are stored in a computer-readable medium, such as a non-transitory mass storage device, loaded into memory and executed by a CPU. Some steps or portions of steps in the flow diagram may be omitted or changed in order.

At step 805, characteristics of entities of an environment may be received. The environment may be the environment 230 in which the autonomous system 200 may be configured to operate. The entities may define the environment 230. The computer system 210 of the autonomous system 200 may receive the characteristics and populate a map of the environment 230, the map comprising the characteristics. A current position of the autonomous system 200 may be determined using the perception unit 202 and/or using a positioning system, such as a global positioning system (GPS) sensor and/or other positioning technologies.

The entities may be human entities or non-human entities. Characteristics of human entities may be selected in a group of characteristics comprising: a formation of the human entity, a number of persons comprised in the human entity, an orientation of the persons of the human entity, a location of the human entity, a level of business of the human entity, or a combination thereof. The computer system 210 may be configured to process the received characteristics and determine a location of the autonomous system in the environment 230.

Characteristics may be received from a networking system, such as networking system 212, and/or from a perception unit, such as perception unit 202. Characteristics may be updated at any time by the networking system 212 and/or the perception unit 202. The map comprising the characteristics may be updated as new information is received, such as additional information relating to characteristics of the entities from the perception unit 202 and/or the networking system 212, at a predetermined frequency, and/or at any other interval. Characteristics and/or the map populated with the characteristics may be stored in a memory such as memory 206.

Social and physical norms may be stored in the memory 206 and further associated with entities. Social and physical norms may be computer-readable sets of instructions defining costs and representing riskiness of a navigation of the autonomous system 200 nearby corresponding entities. For instance, social and physical norms associated with a human entity may be used by the computer system 210 to define a private area around the human entity such as private areas 12, 14 and 16.

At step 810, instructions to identify a destination are received by the computer system 210. The instructions may be transmitted by an operator of the autonomous system *via* the networking system 212. The instructions may be generated by the computer system 210 based on information provided by the perception unit 202.

If determination is made based on the instructions that the autonomous system has to interact with a human entity, the computer system 210 may determine a destination in a vicinity of the human entity based on the characteristics of the human entity and on the social and physical norms associated thereto. Therefore, the destination may depend on characteristics of the human entity, such as a number of persons comprised in the human entity, an orientation of the persons, the level of business of the persons, etc.

If determination is made based on the instructions that the autonomous system does not have to interact with a person, the instructions may comprise the destination.

At step 815, the computer system 210 may generate a navigation path using a hierarchical path planning. The navigation path may be defined between a current location of the autonomous system 210 and the destination determined at step 810 using the map of the environment 230. The navigation path may comprise one or more waypoints to be followed by the autonomous system 200 to reach the destination. Each waypoint may comprise coordinates relative to a current location of the autonomous system 200. The one or more waypoints may define segmental paths between two consecutive waypoints. Therefore, the autonomous system 200 may navigate on the segmental paths to reach the destination.

Location of the one or more waypoints may be based on the characteristics of the entities, such as location and/or orientation of the entities comprised in the map of the environment 230, and the social and physical norms associated thereto. Indeed, the one or more waypoints and the segmental path may be associated with location costs based on the characteristics of the entities and the social and physical norms associated thereto, the map of the environment 230 being indicative of characteristics of human and non-human entities. A global cost may be associated with the navigation path. The global cost may comprise a combination of the location costs of the one or more waypoints and the location costs of the segmental paths. The global cost may comprise a length cost corresponding to a length of the navigation path. Upon generating the navigation path, the computer system 210 may minimize the global cost of the navigation path. This may allow to maximize an accordance of the navigation of the autonomous system 200 with the social and physical norms of the entities. More precisely, this may allow the autonomous system 200 to navigate safely and/or without inconveniencing and/or disturbing entities of the environment 230.

At step 820, the computer system 210 may execute instructions to cause the autonomous system to navigate along the navigation path. The instructions may be generated by the computer system 210 and further transmitted to a chassis of the autonomous system 200, such as the chassis 208 *via* a chassis controller, such as the chassis controller 220. Although described as being sent to the chassis controller 220, it should be understood that the instructions may be sent to any other system or systems operating the autonomous system 200, and/or may be used by the computer system 210 to operate the autonomous system 200.

The navigation path may be adjusted by the computer system 210 during navigation. For instance, the computer system 210 may receive update of the characteristics of the entities from the networking device 212 during navigation, and further modify a location of one or more of the waypoints and/or a location of the destination according to the characteristics and the social and physical norms associated thereto. An adjustment of the navigation path may be performed in accordance with the following sub-steps.

At sub-step 822, upon navigation of the autonomous system 200 from a first waypoint to a consecutive waypoint, the computer system may receive updates of the characteristics of the entities of the environment 230. The updates may correspond to entities located in a vicinity of the autonomous system 200. The updates may be provided by the perception unit 202. A speed of the autonomous system 200 may be adjusted based on the location costs of the first waypoints, the consecutive waypoint and/or the segmental path defined between the two.

At sub-step 824, a sub-path between the first waypoint and the consecutive waypoint may be generated. The computer system 210 may generate the sub-path. The sub-path may comprise sub-waypoints to be followed by the autonomous system 200 to reach the consecutive waypoint. The sub-waypoints may define segmental paths between two consecutive sub-waypoints. Therefore, the autonomous system 200 may navigate on the segmental paths to reach the consecutive waypoint.

Location of the sub-waypoints may be based on the updates of the characteristics of the entities, such as location and/or orientation of the entities, and the social and physical norms associated thereto. Indeed, the sub-waypoints and the segmental path between sub-waypoints may be associated with location costs based on the updates of the characteristics of the entities and the social and physical norms associated thereto. A sub-cost may be associated with the sub-path. The sub-cost may comprise a combination of the location costs of the one or more sub-waypoints and the location costs of the segmental paths. The sub-cost may comprise a length cost corresponding to a length of the sub-path. Upon generating the sub-path, the computer system 210 may minimize the sub-cost of the sub-path. This may allow to maximize an accordance of the navigation of the autonomous system 200 with the social and physical norms of the entities between the first waypoint and the consecutive waypoint. The computer may adjust a location of the consecutive waypoint based on the updates of the characteristics of the entities and the social and physical norms associated thereto.

At sub-step 826, the computer system 210 may cause the autonomous system 200 to follow the sub-path and reach the consecutive waypoint. The computer system 210 may generate instructions and further transmit said instructions to the chassis 208 *via* the chassis controller 220. Sub-steps 822 to 826 may be repeated until the autonomous system 200 reaches the destination of the navigation path.

It should be expressly understood that not all technical effects mentioned herein need to be enjoyed in each and every embodiment of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A method for generating a navigation path for an autonomous system, wherein the autonomous system comprises a processor, the method comprising:
receiving, by the processor, first data comprising characteristics of entities, the entities defining an environment in which the autonomous system is configured to operate;
receiving, by the processor, first instructions causing the autonomous system to identify a destination in the environment;
generating a navigation path comprising waypoints to be followed by the autonomous system to reach the destination from a current position of the autonomous system, the waypoints being generated based on the characteristics of the entities and defining segmental paths;
executing, by the processor, second instructions causing the autonomous system to navigate along the navigation path; and
upon navigation of the autonomous system from a first waypoint to a second waypoint:
accessing, by the processor, second data comprising updates of the characteristics of the entities located in a vicinity of a corresponding segmental path;
generating, by the processor, a sub-path between the first waypoint and the second waypoint based on second information; and
executing, by the processor, third instructions causing the autonomous system to navigate along the sub-path to reach the second waypoint.

2. The method of claim 1, wherein entities are partitioned into human entities and non-human entities, characteristics of one of the human entities being selected in a group of characteristics comprising: a formation of the human entity, a number of persons comprised in the human entity, an orientation of the persons of the human entity, a location of the human entity, a level of business of the human entity, or a combination thereof.

3. The method of claim 2, wherein, upon receiving first instructions causing the autonomous system to identify a destination in the environment, the method further comprises:
if determination is made based on the first instructions that the autonomous system has to interact with a human entity:
accessing characteristics of the human entity; and
determining a destination in a vicinity of the human entity based on the characteristics of the human entity.

4. The method of claim 3, wherein determining a destination in a vicinity of the human entity is further based on social and physical norms associated with the human entity.

5. The method of any one of claims 1 to 4, wherein locations of the waypoints are determined based on social and physical norms associated with the entities, the social and physical norms defining location costs, a location of each of the waypoints being associated with a location cost, each segmental path being associated with a location cost, and generating the navigation path comprises minimizing a global cost, the global cost comprising a combination of the location cost of each of the waypoints and each segmental path.

6. The method of any one of claims 1 to 5, wherein generating a sub-path between the first waypoint and the second waypoint comprises:
generating one or more sub-waypoints to be followed by the autonomous system to reach the consecutive waypoint, the sub-waypoints being generated based on social and physical norms associated with the entities, the social and physical norms defining location costs, each location of one sub-waypoint being associated with a location cost, and generating the sub-path comprises minimizing a sub-cost, the sub-cost comprising a combination of the location cost of each of the one or more sub-waypoints.

7. The method of claim 6, wherein a first set of social and physical norms are associated with human entities and a second set of social and physical norms are associated with non-human entities.

8. The method of any one of claims 1 to 7, wherein concurrently to executing, by the processor, second instructions causing the autonomous system to navigate along the navigation path:
an update of the characteristics of entities in the environment is received by the processor; and
the locations of the waypoints are adjusted based on the update of the characteristics of entities.

9. An autonomous system configured for navigating in an environment comprising:
a processor comprising at least one processor and a memory storing a plurality of executable instructions which, when executed by the at least one processor, cause the processor to:
receive first data comprising characteristics of entities in the environment, the entities defining an environment in which the autonomous system is configured to operate;
receive first instructions causing the autonomous system to identify a destination in the environment;
generate a navigation path comprising waypoints to be followed by the autonomous system to reach the destination from a current position of the autonomous system, the waypoints being generating based one the characteristics of the entities and defining segmental paths between two consecutive waypoints;
cause the autonomous system to navigate along the navigation path; and
upon navigation of the autonomous system from a first waypoint to a second waypoint:
access second data comprising updates of the characteristics of the entities located in a vicinity of a corresponding segmental path;
generate a sub-path between the first waypoint and the second waypoint based on second data; and
follow the sub-path to reach the second waypoint.

10. The autonomous system of claim 9, further comprising:
a network device communicably connected to a network and configured for receiving the characteristics of the entities and the updates of the characteristics of the entities; and
a perception unit configured to provide the characteristics and the updates of the characteristics of the entities in the vicinity of the autonomous system.

11. The autonomous system of claim 9 or 10, wherein locations of the waypoints are determined based on social and physical norms associated with the entities, the social and physical norms defining location costs, each location of one waypoint being associated with a location cost, each segmental path being associated with a location cost, and generating the navigation path comprises minimizing a global cost, the global cost comprising a combination of the location cost of each of the waypoints and each segmental path.

12. The autonomous system of any one of claims 9 to 11, wherein, upon generating a sub-path between the first waypoint and the consecutive waypoint, the processor is further configured to:
generate one or more sub-waypoints to be followed by the autonomous system to reach the consecutive waypoint, the sub-waypoints being generated based on social and physical norms associated with the entities, the social and physical norms defining location costs, each location of one sub-waypoint being associated with a location cost, and generating the sub-path comprises minimizing a sub-cost, the sub-cost comprising a combination of the location cost of each of the one or more sub-waypoints.

13. The autonomous system of any one of claims 9 to 12, wherein entities are partitioned into human entities and non-human entities, characteristics of one of the human entities being selected in a group of characteristics comprising: a formation of the human entity, a number of persons comprised in the human entity, an orientation of the persons of the human entity, a location of the human entity, a level of business of the human entity, or a combination thereof.

14. The autonomous system of claim 13, wherein, upon receiving first instructions causing the autonomous system to identify a destination in the environment, the processor is further configured to:
if determination is made based on the first instructions that the autonomous system has to interact with a human entity:
access characteristics of the human entity; and
determine a destination in a vicinity of the person based on the characteristics of the human entity and the social and physical norms.

15. The autonomous system of any one of claims 9 to 14, wherein entities are partitioned into human entities and non-human entities, and a first set of social and physical norms are associated with human entities and a second set of social and physical norms are associated with non-human entities.
